# EUROPEAN PATENT APPLICATION

(11) **EP 2 712 224 A1**
(43) Date of publication of application: **26.03.2014**
(21) Application number: 12803959.1
(22) Date of filing: 28.06.2012
(51) Int. Cl.: H04W 16/28, H04B 7/06, H04B 7/08

(54) **ANTENNA INFORMATION MANAGEMENT DEVICE, ANTENNA AND METHOD AND DEVICE FOR MANAGING ANTENNA BEAM CHARACTERISTICS**

(30) Priority: 28.06.2011 CN 201110176598
(71) Applicant: Huawei Technologies Co., Ltd, Shenzhen, Guangdong 518129 (CN)
(72) Inventor: GONG, Lanping, Shenzhen Guangdong 518129 (CN); WANG, Bin, Shenzhen Guangdong 518129 (CN)
(74) Representative: Pfenning, Meinig & Partner GbR
(86) International application number: PCT/CN2012/077773
(87) International publication number: WO 2013/000424

(57) **Abstract**

An embodiment of the present invention provides an apparatus for managing antenna information, including: a storing unit, a data interface unit, and a micro control unit, where the storing unit is configured to store antenna information; the data interface unit is configured to receive or send the antenna information; the micro control unit is electrically connected to the storing unit and the data interface unit each, so as to store the antenna information received by the interface unit into the storing unit or output the antenna information stored in the storing unit from the interface unit; and the antenna information includes amplitude and phase values of an antenna that correspond to different frequency bands and different beam widths of the antenna. In this embodiment of the present invention, antenna information is stored into or acquired from the storing unit through the data interface unit and the micro control unit, thereby facilitating antenna information management and use.

## Description

This application claims priority to Chinese Patent Application No. 201110176598.6, filed with the Chinese Patent Office on June 28, 2011 and entitled "APPARATUS FOR MANAGING ANTENNA INFORMATION, ANTENNA, AND METHOD AND APPARATUS FOR MANAGING ANTENNA BEAM CHARACTERISTICS", which is incorporated herein by reference in its entirety.

### TECHNICAL FIELD

Embodiments of the present invention relate to the antenna field, and in particular to management of antenna information and the field of beam assignment based on the antenna information.

### BACKGROUND

With development of third-generation mobile communications technologies (3G), the smart antenna technology is popularly used. The smart antenna is a horizontally tunable antenna with digital domain beam forming. Such a smart antenna allows different users to weight a signal amplitude and phase through a digital domain, so as to form user-level beams in different directions, thereby effectively suppressing interference incurred by different users and enabling coverage of a cell to be dynamically adjusted to facilitate network-wide optimization for mobile communications. The inventor finds the following problem in a process of implementing the present invention: Different design methods are used for antennas of different manufacturers, for example, power splitting networks of antennas are different and there are different phases and insertion losses for each column of oscillators of each antenna; therefore, plenty of weights need to be configured for an antenna, and during actual network planning, accuracy of information such as a model and a manufacturer of an onsite antenna can hardly be ensured due to a variety of aspects involved, construction factors, and variance of data configuring parties; these factors make it necessary to manually configure various information about the antenna, including a type and the manufacturer of the antenna during construction of the antenna; and antenna weight configuration errors may easily occur when antennas of varied standards are used together, thereby affecting network coverage and greatly impacting network performance.

### SUMMARY

An embodiment of the present invention provides an apparatus for managing antenna information to help improve antenna configuration precision.

An embodiment of the present invention further provides an antenna to help improve the antenna configuration precision.

An embodiment of the present invention further provides a method for managing antenna beam characteristics to help improve the antenna configuration precision.

An embodiment of the present invention further provides an apparatus for managing antenna beam characteristics to help improve the antenna configuration precision.

An apparatus for managing antenna information, includes: a storing unit, a data interface unit, and a micro control unit, where the storing unit is configured to store antenna information; the data interface unit is configured to receive or send the antenna information; the micro control unit is electrically connected to the storing unit and the data interface unit each, so as to store the antenna information received by the interface unit into the storing unit or output the antenna information stored in the storing unit from the interface unit; and the antenna information includes amplitude and phase values of an antenna that correspond to different frequency bands and different beam widths of the antenna.

An antenna, includes multiple dual-polarized dipole arrays, where the multiple dual-polarized dipole arrays are electrically connected to an antenna feeder system through a calibration port, the antenna further includes an apparatus for managing antenna information that is connected to the calibration port, and the apparatus for managing antenna information includes a storing unit, a data interface unit, and a micro control unit; the storing unit is configured to store antenna information; the data interface unit is configured to receive or send the antenna information; the micro control unit is electrically connected to the storing unit and the data interface unit each, so as to store the antenna information received by the interface unit into the storing unit or output the antenna information stored in the storing unit from the interface unit; and the antenna information includes amplitude and phase values of the antenna that correspond to different frequency bands and different beam widths of the antenna.

A method for managing antenna beam characteristics, includes:
presetting target weights of beam characteristics;
acquiring initial information of weights of the beam characteristics stored in an apparatus for managing antenna information; and
correcting the target weights of the beam characteristics according to the acquired initial information of weights of the beam characteristics, and using the corrected target weights of the beam characteristics as beam forming weight coefficients for beam forming performed on an antenna; and

An apparatus for managing antenna beam characteristics, includes:
a beam characteristics setting unit, configured to preset target weights of beam characteristics;
a beam characteristics acquiring unit, configured to acquire initial information of weights of the beam characteristics stored in an apparatus for managing antenna information; and
a beam characteristics correcting unit, configured to correct the target weights of the beam characteristics according to the acquired initial information of weights of the beam characteristics, and use the corrected target weights of the beam characteristics as beam forming weight coefficients for beam forming performed on an antenna.

According to the apparatus for managing antenna information, the antenna, and the method and the apparatus for managing antenna beam characteristics provided in the embodiments of the present invention, an apparatus for managing antenna information is arranged to manage antenna information, so that the antenna information may be directly acquired from the apparatus for managing antenna information in a configuration or beam forming process of an antenna. In this way, precise reference information is provided for configuration or adjustment of the antenna while time for acquiring the antenna information may be saved to improve efficiency.

### BRIEF DESCRIPTION OF DRAWINGS

FIG. 1 is a schematic diagram of an apparatus for managing antenna information according to an embodiment of the present invention;
FIG. 2 is a list of partial information included in an apparatus for managing antenna information according to an embodiment of the present invention;
FIG. 3 is a schematic diagram of an interface unit of the apparatus for managing antenna information shown in FIG. 1;
FIG. 4 is a schematic diagram of an antenna according to an embodiment of the present invention;
FIG. 5 is a flowchart of a method for managing beam characteristics according to an embodiment of the present invention; and
FIG. 6 is a schematic diagram of an apparatus for managing beam characteristics according to an embodiment of the present invention.

### DESCRIPTION OF EMBODIMENTS

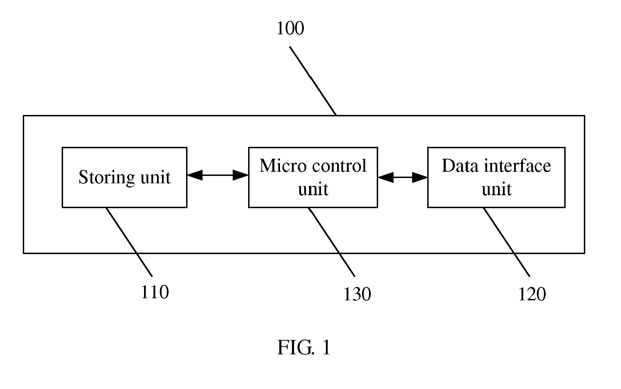

Referring to FIG. 1, an embodiment of the present invention provides an apparatus 100 for managing antenna information, including: a storing unit 110, a data interface unit 120, and a micro control unit 130, where the storing unit 110 is configured to store antenna information; the data interface unit 120 is configured to receive or send the antenna information; the micro control unit 130 is electrically connected to the storing unit 110 and the data interface unit 120 each, so as to store the antenna information received by the interface unit into the storing unit 110 or output the antenna information stored in the storing unit 110 from the interface unit 120; and the antenna information includes amplitude and phase values of an antenna that correspond to different frequency bands and different beam widths of the antenna.

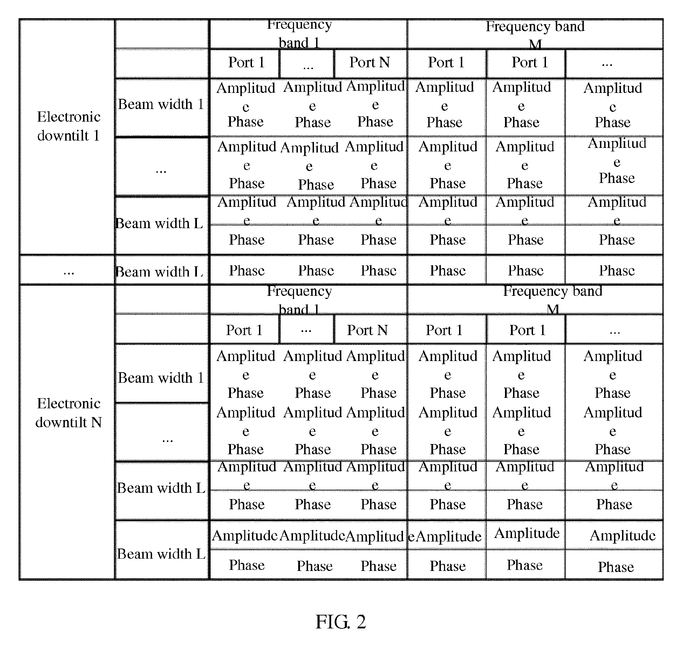

Referring to FIG. 2, the antenna information according to this embodiment of the present invention includes amplitude and phase information corresponding to four dimensions: frequency band, electronic downtilt, beam width, and port information. Such information is especially important in a process of configuring antenna parameters, and in particular in a beam forming process of the antenna.

In the apparatus 100 for managing antenna information according to this embodiment of the present invention, a storing unit 110 stores antenna information including amplitude and phase values of an antenna that correspond to different frequency bands and different beam widths of the antenna, thereby facilitating antenna management and parameter configuration and beam forming in an process of practically using the antenna.

Further, the antenna information further includes one or more of the following types of information: manufacturer, model, sequence number, gain, front-to-back ratio, side lobe suppression, antenna survey information, and antenna characteristic information. The antenna survey information includes a mounting height, a downtilt, an azimuth, and a geographical location; and the antenna characteristic information is PIM, standing wave, or the like. Further, the antenna information may be stored into the storing unit 120 during antenna configuration, or may be stored into the storing unit 120 after the information is detected through different detecting apparatuses and acquired. For example, address/location information and mounting height information of a NodeB may be stored into the storing unit after being measured through a satellite positioning module (or a gyroscope or a barometric altimeter) arranged inside or outside an antenna shade.

In this embodiment of the present invention, the antenna information may be directly acquired from a storing unit in a process of practically using or configuring an antenna, instead of being acquired by manually searching an antenna reference manual, thereby improving efficiency and accuracy of antenna information management.

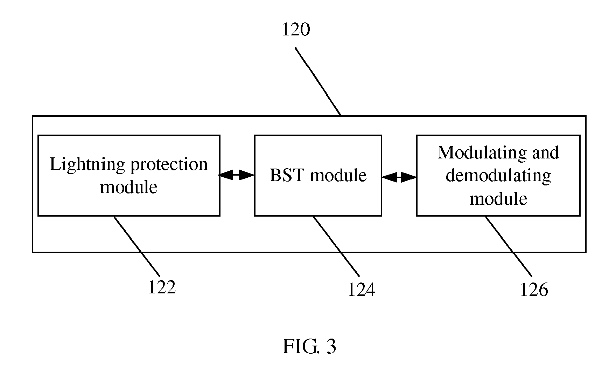

Further, referring to FIG. 3, the data interface 120 unit includes a lightning protection module 122, a BST module 124, and a modulating and demodulating module 126, where the lightning protection module 122, the BST module 124, and the modulating and demodulating module 126 are electrically connected in sequence, and the data interface unit 120 is connected to the micro control unit 130 through the modulating and demodulating module 126. The lightning protection module 122 is configured to connect to a calibration port of the antenna, so as to prevent induced current that is output from the calibration port from destroying an internal circuit of the apparatus 100 for managing antenna information. The BST module 124 is configured to separate a calibration signal from an OOK/DC signal. The modulating and demodulating module 126 mostly implements conversion between the OOK signal and an asynchronous serial communications port signal (a 485 signal). The OKK signal refers to binary on/off keying (On_OFF Keying, OOK for short).

In the apparatus for managing antenna information according to this embodiment of the present invention, a data interface 120 may be connected to a calibration port of an antenna, thereby simplifying a feeder circuit that uses the apparatus for managing an antenna and preventing the apparatus for managing antenna information from being damaged by excessively high current in a use process.

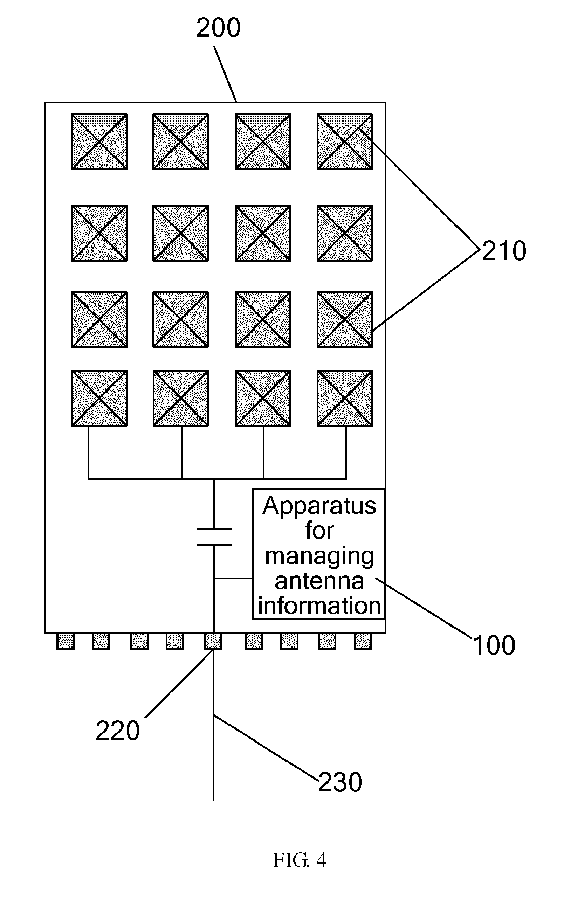

Referring to FIG. 4, the present invention further provides an antenna 200, including multiple dual-polarized dipole arrays 210, where the multiple dual-polarized dipole arrays 210 are electrically connected to an antenna feeder system 230 through a calibration port 220. The antenna further includes an apparatus 100 for managing antenna information, and the apparatus 100 for managing antenna information includes a storing unit 110, a data interface unit 120, and a micro control unit 130, where the storing unit 110 is configured to store antenna information; the data interface unit 120 is connected to the calibration port 220, so as to receive or send the antenna information; the micro control unit 130 is electrically connected to the storing unit 110 and the data interface unit 120 each, so as to store the antenna information received by the interface unit 120 into the storing unit 110 or output the antenna information stored in the storing unit 110 from the interface unit 120; and the antenna information includes amplitude and phase values of the antenna that correspond to different frequency bands and different beam widths of the antenna.

In this embodiment of the present invention, an apparatus for managing antenna information is arranged inside an antenna, so that antenna information is directly acquired from a storing unit in a process of practically using or configuring the antenna, instead of being acquired by manually searching an antenna reference manual, thereby improving efficiency and accuracy of antenna information management.

Further, the antenna information further includes one or more of the following types of information: manufacturer, model, sequence number, gain, front-to-back ratio, side lobe suppression, antenna survey information, and antenna characteristic information. The antenna survey information includes a mounting height, a downtilt, an azimuth, and a geographical location; and the antenna characteristic information is PIM, standing wave, or the like.

In this embodiment of the present invention, the antenna information may be directly acquired from a storing unit in a process of practically using or configuring an antenna, instead of being acquired by manually searching an antenna reference manual, thereby improving efficiency and accuracy of antenna information management.

Further, the data interface unit 120 includes a lightning protection module 122, a BST module 124, and a modulating and demodulating module 126, where the lightning protection module 122, the BST module 124, and the modulating and demodulating module 126 are electrically connected in sequence, and the data interface unit 120 is connected to the micro control unit 130 through the modulating and demodulating module 126. The lightning protection module 122 is connected between the calibration port 220 and the BST module 124, so as to prevent induced current that is output from the calibration port 220 from destroying an internal circuit of the apparatus 100 for managing antenna information. The BST module 124 is configured to separate a calibration signal from an OOK/DC signal. The modulating and demodulating module 126 mostly implements conversion between the OOK/DC signal and a 485 signal.

In the antenna 200 according to this embodiment of the present invention, a data interface 120 of an apparatus 100 for managing antenna information may be connected to a calibration port 220 of the antenna 200, thereby simplifying a feeder circuit that uses the apparatus for managing an antenna and preventing the apparatus for managing antenna information from being damaged by excessively high current in a use process.

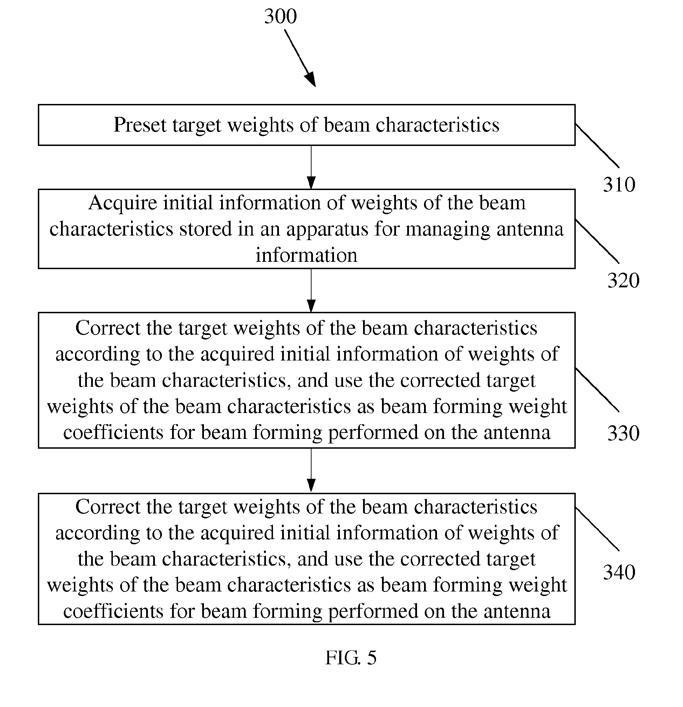

Refer to FIG. 5. The present invention further provides a method 300 for managing antenna beam characteristics, including the following steps:
310. Preset target weights of beam characteristics.

Generally, target weights of beam characteristics need to be preset, so that beam characteristics of an antenna may be adjusted according to different requirements. The weights of beam characteristics generally refer to characteristics of a target broadcast beam according to a network planning requirement, including a beam width such as 30°, 65°, or 90°, downtilt information, and each column of amplitude and phase weights that are required by the antenna and correspond to the target broadcast beam.

320. Acquire initial information of weights of the beam characteristics stored in an apparatus for managing antenna information.

Each column of initial weights of beam characteristics of the antenna needs to be learned and serves as a reference for correcting the target weights of characteristics, so as to adjust a beam of the antenna to a preset state. Specifically, a NodeB or an apparatus for managing an antenna indexes, according to frequency band, beam width, and downtilt information, each column of amplitude and phase weights that correspond to the antenna; and the weights are read into the NodeB or the apparatus for managing an antenna, so as to serve as the initial information of weights of beam characteristics.

330. Correct the target weights of the beam characteristics according to the acquired initial information of weights of the beam characteristics, and use the corrected target weights of the beam characteristics as beam forming weight coefficients for beam forming performed on the antenna.

The NodeB or the apparatus for managing an antenna corrects the target weights of beam characteristics according to the initial information of weights of beam characteristics acquired from the apparatus for managing antenna information, so as to obtain accurate target weights of beam characteristics, and use the corrected target weights of beam characteristics as beam forming weight coefficients for beam forming performed on the antenna.

In the present invention, initial information of weights of beam characteristics stored in an apparatus for managing antenna information is acquired as a reference, so as to implement calibration and beam forming of an antenna, thereby improving beam forming efficiency and precision.

Further, the method 300 for managing antenna beam characteristics provided in the present invention further includes:
performing beam forming on the antenna according to the beam forming weight coefficients.

Further, the initial information of weights of beam characteristics includes a frequency band, a downtilt, and a beam width.

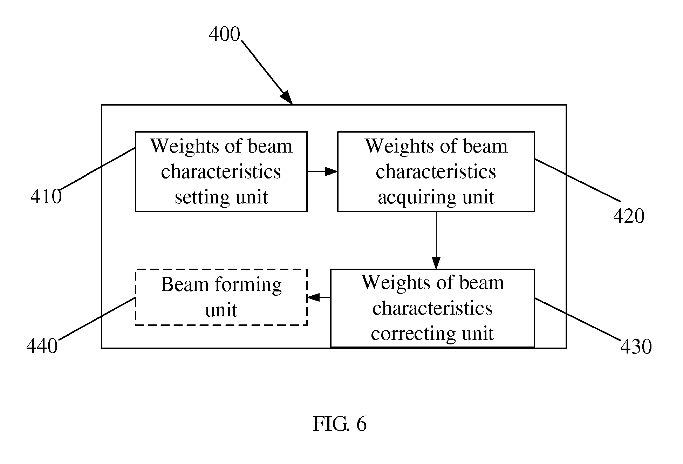

Refer to FIG. 6. The present invention further provides an apparatus 400 for managing antenna beam characteristics, including:
a beam characteristics setting unit 410, configured to preset target weights of beam characteristics, where:
   generally target weights of beam characteristics need to be preset, so that beam characteristics of an antenna may be adjusted according to different requirements. The weights of beam characteristics generally refer to characteristics of a target broadcast beam according to a network planning requirement, including a beam width such as 30°, 65°, or 90°, downtilt information, and each column of amplitude and phase weights that are required by the antenna and correspond to the target broadcast beam;
a beam characteristics acquiring unit 420, configured to acquire initial information of weights of the beam characteristics stored in an apparatus for managing antenna information, where:
   each column of initial weights of beam characteristics of the antenna needs to be learned and serves as a reference for correcting the target weights of characteristics, so as to adjust a beam of the antenna to a preset state. Specifically, a NodeB or an apparatus for managing an antenna indexes, according to frequency band, beam width, and downtilt information, each column of amplitude and phase weights that correspond to the antenna; and the weights are read into the NodeB or the apparatus for managing an antenna, so as to serve as the initial information of weights of beam characteristics; and
   a beam characteristics correcting unit 430, configured to correct the target weights of the beam characteristics according to the acquired initial information of weights of the beam characteristics, and use the corrected target weights of the beam characteristics as beam forming weight coefficients for beam forming performed on the antenna, where:
      the NodeB or the apparatus for managing an antenna corrects the target weights of beam characteristics according to the initial information of weights of beam characteristics acquired from the apparatus for managing antenna information, so as to obtain accurate target weights of beam characteristics, and use the corrected target weights of beam characteristics as beam forming weight coefficients for beam forming performed on the antenna.

In the present invention, initial information of weights of beam characteristics stored in an apparatus for managing antenna information is acquired as a reference, so as to implement beam forming of an antenna, thereby improving beam forming efficiency and precision.

Further, the apparatus 400 for managing antenna beam characteristics provided in the present invention further includes:
a beam forming unit 440, configured to perform beam forming on the antenna according to the beam forming weight coefficients.

Further, the information of weights of beam characteristics includes a frequency band, a downtilt, and a beam width.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some technical features thereof, without departing from the spirit and scope of the technical solutions of the embodiments of the present invention.

## Claims

1. An apparatus for managing antenna information, comprising: a storing unit, a data interface unit, and a micro control unit, wherein the storing unit is configured to store antenna information; the data interface unit is configured to receive or send the antenna information; the micro control unit is electrically connected to the storing unit and the data interface unit each, so as to store the antenna information received by the interface unit into the storing unit or output the antenna information stored in the storing unit from the interface unit; and the antenna information comprises amplitude and phase values of an antenna that correspond to different frequency bands and different beam widths of the antenna.

2. The apparatus for managing antenna information according to claim 1, wherein the antenna information further comprises one or more of the following types of information: manufacturer, model, sequence number, gain, front-to-back ratio, side lobe suppression, antenna survey information, and antenna characteristic information.

3. The apparatus for managing antenna information according to claim 1, wherein the data interface unit comprises a lightning protection module, a BST module, and a modulating and demodulating module; the lightning protection module, the BST module, and the modulating and demodulating module are electrically connected in sequence; and the data interface unit is connected to the micro control unit through the modulating and demodulating module.

4. An antenna, comprising multiple dual-polarized dipole arrays, wherein the multiple dual-polarized dipole arrays are electrically connected to an antenna feeder system through a calibration port, the antenna further comprises an apparatus for managing antenna information that is connected to the calibration port, and the apparatus for managing antenna information comprises a storing unit, a data interface unit, and a micro control unit; the storing unit is configured to store antenna information; the data interface unit is configured to receive or send the antenna information; the micro control unit is electrically connected to the storing unit and the data interface unit each, so as to store the antenna information received by the interface unit into the storing unit or output the antenna information stored in the storing unit from the interface unit; and the antenna information comprises amplitude and phase values of the antenna that correspond to different frequency bands and different beam widths of the antenna.

5. The antenna according to claim 4, wherein the antenna information further comprises one or more of the following types of information: manufacturer, model, sequence number, gain, front-to-back ratio, side lobe suppression, antenna survey information, and antenna characteristic information.

6. The antenna according to claim 4, wherein the data interface unit comprises a lightning protection module, a BST module, and a modulating and demodulating module; the lightning protection module, the BST module, and the modulating and demodulating module are electrically connected in sequence; and the lightning protection module is connected between the calibration port and the BST module, and the data interface unit is connected to the micro control unit through the modulating and demodulating module.

7. A method for managing antenna beam characteristics, comprising:
presetting target weights of beam characteristics;
acquiring initial information of weights of the beam characteristics stored in an apparatus for managing antenna information; and
correcting the target weights of the beam characteristics according to the acquired initial information of weights of the beam characteristics, and using the corrected target weights of the beam characteristics as beam forming weight coefficients for beam forming performed on an antenna.

8. The method for managing antenna beam characteristics according to claim 7, further comprising:
performing beam forming on the antenna according to the beam forming weight coefficients.

9. The method for managing antenna beam characteristics according to claim 7, wherein the information of weights of the beam characteristics comprises a frequency band, a downtilt, and a beam width.

10. An apparatus for managing antenna beam characteristics, comprising:
a beam characteristics setting unit, configured to preset target weights of beam characteristics;
a beam characteristics acquiring unit, configured to acquire initial information of weights of the beam characteristics stored in an apparatus for managing antenna information; and
a beam characteristics correcting unit, configured to correct the target weights of the beam characteristics according to the acquired initial information of weights of the beam characteristics, and use the corrected target weights of the beam characteristics as beam forming weight coefficients for beam forming performed on an antenna.

11. The apparatus for managing antenna beam characteristics according to claim 10, further comprising:
a beam forming unit, configured to perform beam forming on the antenna according to the beam forming weight coefficients.

12. The apparatus for managing antenna beam characteristics according to claim 10, wherein the information of weights of the beam characteristics comprises a frequency band, a downtilt, and a beam width.
